# EUROPEAN PATENT APPLICATION

(11) **EP 3 174 234 A1**
(43) Date of publication of application: **31.05.2017**
(21) Application number: 15196762.7
(22) Date of filing: 27.11.2015
(51) Int. Cl.: H04L 5/00, H04L 27/26

(54) **OUT-OF-BAND RADIATION REDUCTION FOR F-OFDM**

(71) Applicant: NTT DOCOMO, INC., Chiyoda-ku Tokyo (JP)
(72) Inventor: WEITKEMPER, Petra, 80687 Munich (DE); KUSUME, Katsutoshi, 80687 Munich (DE); BAZZI, Jamal, 80687 Munich (DE); IWAMURA, Mikio, 80687 Munich (DE)
(74) Representative: Betten & Resch

(57) **Abstract**

A method and apparatus for transmitting a multicarrier signal, is presented wherein the signal is generated by applying filtering on a per subband basis such that a resource space is divided into a plurality of subbands wherein each of the subbands includes a plurality of subcarriers, wherein the subcarriers inside a subband include subcarriers carrying symbols, wherein each of the symbols is one of a data symbol, a pilot symbol, a control symbol, or other symbol, and one or more subcarriers which are not used to transmit any symbol.

## Description

### FIELD OF THE INVENTION

The present invention relates to a method and apparatus for transmitting a multicarrier signal, wherein the signal is generated by applying filtering on a per subband basis such that a resource space is divided into a plurality of subbands wherein each of the subbands includes a plurality of subcarriers.

### BACKGROUND OF THE INVENTION

Orthogonal Frequency Division Multiplexing, OFDM, shows desirable properties in a multiuser scenario as long as all parameters like subcarrier, SC, spacing and symbol duration are constant in the system and the reception of the signal from all users is fully synchronized. In LTE this synchronous reception is achieved by the so-called timing advance which requires a significant amount of signalling. For future applications this overhead for the synchronization may be too inefficient, e.g. for machine-type communication, MTC, traffic, and therefore perfect synchronization may not be guaranteed. Furthermore, the diverse kinds of applications that should be supported by 5G within one band will have very different requirements and one fixed SC spacing may not be efficient as well. In such cases, OFDM is no longer orthogonal and the high out-of-band, OOB, radiation introduces significant interference to the neighbouring user. So-called guard SC between the users can reduce the interference, but due to the spectrum of OFDM a large amount of guard SCs would be needed leading to dramatically reduced efficiency.

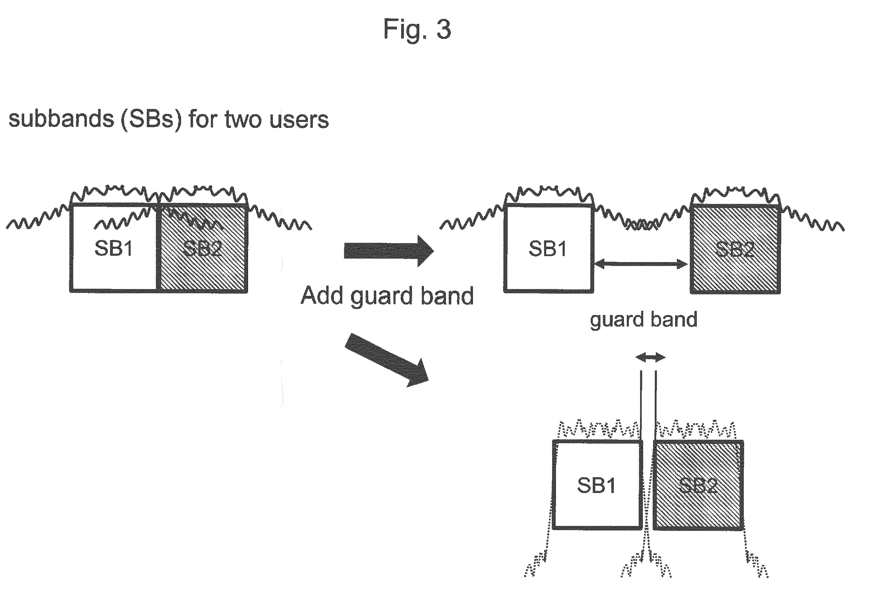

Figure 3 illustrates additional guard bands, including guard SCs, between subbands of different users. For conventional OFDM transmission, wide guard bands, i.e. a large number of guard SCs, are necessary to mitigate or avoid interference, so that overall resource efficiency is reduced.

Therefore, OFDM may not best address the above described requirements and new waveforms may be needed. One alternative is filtered OFDM, f-OFDM, where the entire system band is divided in several subbands and each subband is filtered individually to minimize the out of band emission.

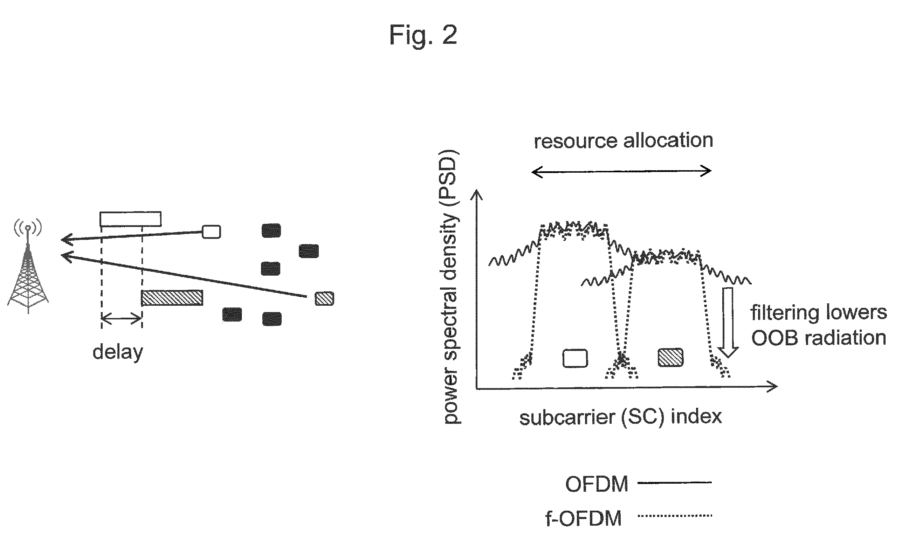

Figure 2 illustrates different waveforms of OFDM vs. f-OFDM transmission, wherein the filtering significantly reduces the out-of-band radiation resulting in possible interference with transmissions in subbands of neighbouring users.

Although depending on the filter design the number of required guard SC can be significantly reduced compared to OFDM, they can probably not be avoided completely in all situations. According to results from state of the art transmission technologies, the number of guard SCs required to mitigate interference depends on several parameters like the received power difference of the neighbouring users, the MCS and the filter shape. The number of guard SCs should therefore be flexibly assigned for each user individually.

As shown in Figure 3, f-OFDM typically requires a narrower guard band, i.e. fewer guard SCs, than conventional OFDM to mitigate or avoid interference.

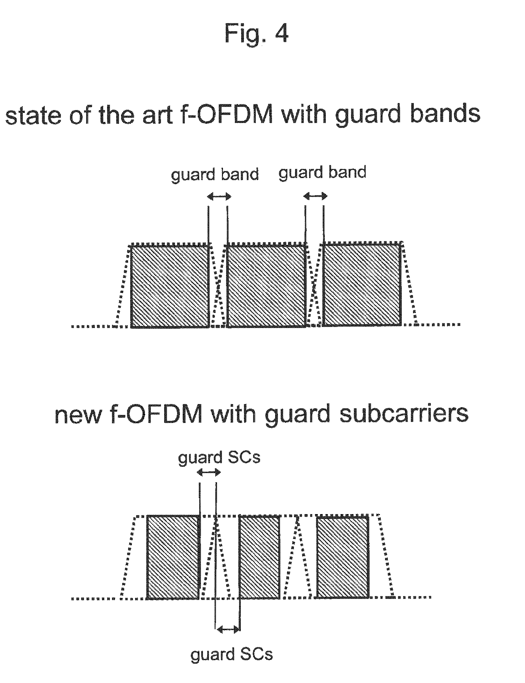

Technologies in the state of the art which propose a flexible number of guard SCs between users using f-OFDM assume that the guard SCs will be added outside the filter passband bandwidth. In this context, the term "filter passband bandwidth" refers to any parameter used for the filter design related to the passband bandwidth, which should be understood as not being limited to what is commonly known as 3dB bandwidth. This is illustrated in Figure 4, which shows in the upper half the state of the art of f-OFDM transmission. In this illustration, the width of a subband of the plurality of subbands is determined by a filter passband bandwidth of a filter applied when generating the multicarrier signal. The signal thus obtained is illustrated and sketched as a dotted line with ascending and descending edges. The subcarriers used for transmission are illustrated as blocks which are spaced apart by guard subbands. The upper part of Figure 4 shows that in the state of the art of f-OFDM transmission guard subbands are placed outside the subbands determined by the filter passband bandwidth.

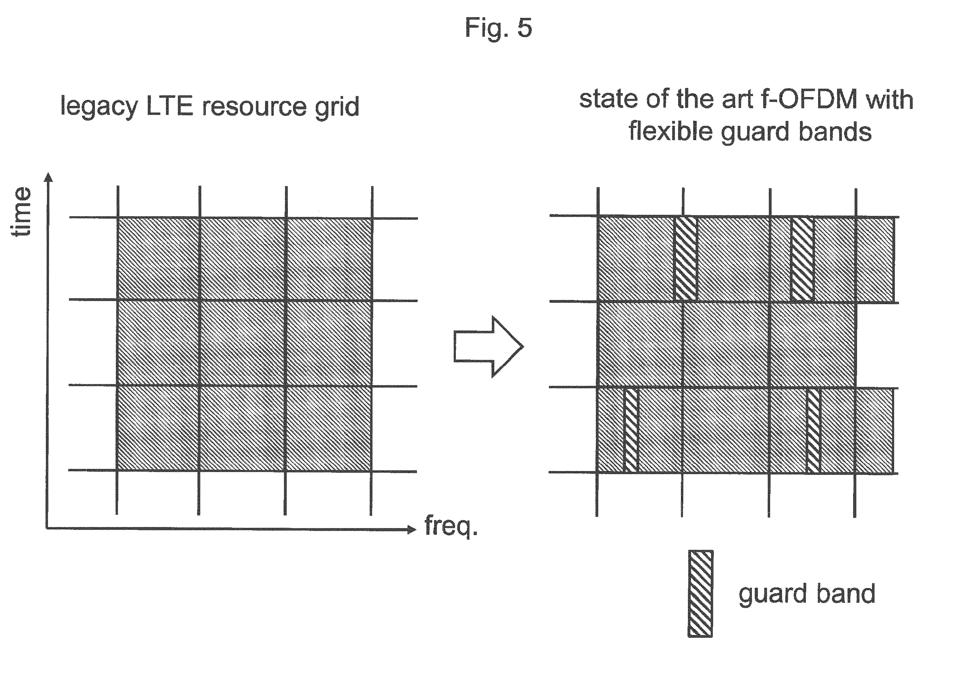

It has been proposed to shift the locations of subbands in order to allocate additional guard bands between the subbands. Examples for such proposals include J. Li, et al., Resource block Filtered-OFDM for future spectrally agile and power efficient systems, Physical Communication 2013 and J. Abdoli, et al., Filtered OFDM: A New Waveform for Future Wireless Systems, SPAWC 2015. From the interference point of view this is a valid solution, but the consequence is that the regular grid of the resources is destroyed. This is illustrated in Figure 5, which shows on the left a regular LTE resource grid and on the right subbands, each corresponding to the filter bandwidth, with intervening guard bands having flexible length to avoid OOB radiation between neighbouring users. Figure 5 demonstrates that the subband boundaries do not follow the regular grid structure any more. This means that boundaries of subbands used for transmission and also boundaries for guard subbands may not coincide with boundaries predefined by the grid, so that possible control, pilot, or similar transmission procedures provided and standardized according to the grid structure may not be available any longer.

This leads to several problems including redesign of resource allocation and signalling in the system, increasing complexity of scheduling etc. It is highly desirable to keep a regular resource grid while reducing the interference between users.

### SUMMARY OF THE INVENTION

According to one embodiment, there is provided a method for transmitting a multicarrier signal, wherein said signal is generated by applying filtering on a per subband basis such that a resource space is divided into a plurality of subbands wherein each of said subbands includes a plurality of subcarriers, wherein said subcarriers inside a subband include subcarriers carrying symbols, wherein each of said symbols is one of a data symbol, a pilot symbol, a control symbol, or other symbol, and one or more subcarriers which are not used to transmit any symbol.

This method has the effect and advantage that the one or more subcarriers which are not used to transmit any symbol may reduce out of band radiation between a transmission in the subband and a transmission in an adjacent subband without requiring that the subband and the adjacent subband are separated by a guard band or guard subcarriers outside the subband.

According to another embodiment, there is provided a method applying transform precoding to symbols before they are mapped onto subcarriers of a multicarrier signal.

This has the effect and advantage that the transmission signals in the time domain result in low peak to average power ratio, PAPR, which is a property that improves the usage of a power amplifier, so that consequently coverage is improved.

According to another embodiment, there is provided a method applying a discrete Fourier transform as transform precoding to symbols before they are mapped onto subcarriers.

This has the effect and advantage that it leads to a straightforward extension of existing single carrier frequency division multiplexing, SC-FDMA, modulation with additional filtering on a per subband basis and the PAPR property can be improved.

According to another embodiment, a start and end of each subband of the plurality of subbands are aligned on a resources grid, the resource grid being formed by a plurality of consecutive resource blocks of the resource space and being time-invariant, and each resource block being formed by a predefined number of at least two subcarriers.

This has the effect and advantage that the transmission method may be applied in coexistence with possibly other transmission methods on the same resource grid, wherein signalling structures which may be already available and alreday possibly standardized on the resource grid may be shared and reused by the transmission technology provided by the embodiment.

According to another embodiment, a width of a subband of the plurality of subbands is determined by a filter passband bandwidth of a filter applied when generating the multicarrier signal.

This has the effect and advantage that the embodiment is in particularly suited for transmission schemes according to filtered OFDM.

According to another embodiment, said one or more subcarriers not used to transmit any symbol are located at an edge of said subband.

This has the effect and advantage that out of band radiation may be reduced at an edge of said subband.

According to another embodiment, said subcarriers not used to transmit any symbol are located such that they lie within a part of said subband, wherein one of the boundaries of said part of said subband coincides with an edge of said subband and another boundary of said part of said subband lies within two edges of said subband.

This has the effect and advantage that out of band radiation may be reduced at an edge of said subband while optimizing the placement of subcarriers for which out of band radiation is reduced and which serve for transmission of a data symbol, a pilot symbol, a control symbol, or other symbol, thus improving efficient use of the resource space.

According to another embodiment, a number of subcarriers not used to transmit any symbol or the part of said subband within which said subcarriers not used to transmit any symbol are located is chosen dynamically based on one or more parameters indicating the extent to which suppression of out of band interference is necessary.

This has the effect and advantage that the number of subcarriers not used to transmit any symbol can be chosen flexibly and that the number of subcarriers not used to transmit any symbol can be kept to a minimum, thus improving efficient use of the resource space.

According to another embodiment, said subcarriers not used to transmit any symbol are located such that they are located only at the upper edge of a subband or inside a range having as boundary the upper edge of the subband, or they are located only at the lower edge of said subband or inside a range having as boundary the lower edge of the subband, or they are located at the upper edge and at the lower edge of said subband or inside two ranges having as boundaries the upper edge and the lower edge of the subband, respectively.

This has the effect and advantage that out of band radiation may be reduced at one or both edges of said subband.

According to another embodiment, the transmission occurs between a transmitter and a receiver, and wherein a number and/or the location of subcarriers not used to transmit any symbol is determined according to one or more parameters, said parameters including one or more of: a modulation and coding scheme, properties of applied filters, and a power relation between the transmission and other transmissions at the receiver.

This has the effect and advantage that the number of subcarriers not used to transmit any symbol may be selected in consideration of properties and parameters, in part, determined by other communicating parties and thus enabling to keep the number of subcarriers not used to transmit any symbol low while reliably ensuring the effect of reducing and avoiding out of band interference.

According to another embodiment of the method described in the previous paragraph, said parameters are known by the transmitter and the receiver.

This has the effect and advantage that the parameters could be predetermined and defined according to a standard without the necessity of signalling the parameters between the transmitter the transmitter and the receiver.

According to another embodiment of the method described in the previous but one paragraph, some or all of said parameters are signalled between the transmitter and the receiver.

This has the effect and advantage that the parameters could be determined dynamically according to a current resource allocation and transmission characteristics determined at the transmitter and/or receiver without the need to employ parameters configured for worst-case interference scenarios all the time. In effect, the parameters can be adapted over time, thus improving the usage efficiency of the available transmission resources while effectively mitigating and avoiding on out of band interference through subcarriers not used to transmit any symbol.

According to another embodiment, the transmission occurs from a first device to a second device, and wherein the number of subcarriers not used to transmit any symbol is signalled from the second device to the first device, and wherein the signalling preferably uses physical layer signalling or MAC layer signalling.

This has the effect and advantage that the number of subcarriers not used to transmit any symbol and used to reduce or avoid out of band radiation may be controlled by a receiver, which my for example be a base station or other wireless network entity that is aware of concurrent communications.

According to another embodiment, a transport block size, TBS, indicating a number of information bits within one codeword is determined according to a TBS index, a number of physical resources or physical resource blocks, and a number of subcarriers not used to transmit any symbol.

This has the effect and advantage that TBS size in the transmission method is selected such that the number of subcarriers not used to transmit any symbol is taken into account.

According to another embodiment, a rate matching algorithm adjusts a number of code bits provided by a rate matcher by reducing a number of code bits according to a number of subcarriers not used to transmit any symbol.

This has the effect and advantage that the number of code bits to be transmitted, which is reduced due to the number of subcarriers not used to transmit any symbol, may be determined very efficiently by simple adjustment of an existing rate matcher algorithm.

According to another embodiment, subcarriers carrying symbols include subcarriers for pilot symbols and/or control information, and wherein a frame structure is adapted to schedule pilot symbols and/or control information by mapping pilot symbols and/or control information or shifting a grid of pilot symbols and/or control information such as to avoid that pilot symbols and/or control information are transmitted on subcarriers not used to transmit any symbol, or cancelling pilot and/or control information symbols that would be transmitted on subcarriers not used to transmit any symbol.

This has the effect and advantage that the subcarriers for pilot symbols and/or control information may be transmitted reliably in the presence of subcarriers not used to transmit any symbol.

According to one embodiment there is provided a transmission apparatus for transmitting a multicarrier signal, comprising: A module for generating said signal by applying filtering on a per subband basis such that a resource space is divided into a plurality of subbands wherein each of said subbands includes a plurality of subcarriers, wherein said subcarriers inside a subband include subcarriers carrying symbols, wherein each of said symbols is one of a data symbol, a pilot symbol, a control symbol, or other symbol, and one or more subcarriers which are not used to transmit any symbol.

According to another embodiment, a transmission apparatus is provided that is adapted to carry out the transmission method described in one of the previous paragraphs.

The effects and advantages achieved by the embodiments of the apparatus correspond to the effects and advantages of the embodiments of the method which have been described in detail above.

### DESCRIPTION OF THE DRAWINGS

Figure 1 shows a schematic overview of the f-OFDM transmission scheme in a transmitter and a receiver.
Figure 2 shows an example of asynchronous access to transmission resources by two out of several MTC devices.
Figure 3 shows the concept of addition guard subcarriers between subbands used by different users in OFDM and f-OFM transmissions.
Figure 4 shows the shift of subbands in f-OFDM transmissions due to the insertion of guard carriers according to the state of the art and subbands in f-OFDM transmissions and the placement of guard subcarriers inside the subbands according to an embodiment of the present invention.
Figure 5 shows a resource grid according to LTE and the use of the resource grid according to an f-OFDM transmission scheme including guard bands according to the state of the art.
Figure 6 shows a resource grid according to LTE and the use of the resource grid according to an f-OFDM transmission scheme including guard bands according to an embodiment of the present invention.
Figure 7 shows transmissions by different transmitters in different subbands separated by a constant number of guard subcarriers for an f-OFDM transmission according to an embodiment of the present invention.
Figure 8 shows transmissions by different transmitters in different subbands separated by a variable number of guard subcarriers for an f-OFDM transmission according to an embodiment of the present invention determined according to one of the mapping tables (a) to (e).
Figure 9 shows signaling of the base station to different transmitters concerning the number of guard subcarriers to be used by each transmitter.
Figure 10 shows a table specifying transport block sizes, which is amended by a column for possible numbers of guard subcarriers.
Figure 11 shows a schematic illustration of a rate matching algorithm which includes a new step of puncturing and inserting guard SCs.
Figure 12 shows a resource block with allocations for control channel, pilot and data symbols, wherein the introduction of guard subcarriers incurs a loss of those pilot and control channel symbols that fall into the guard subcarrier.
Figure 13 shows a resource block with allocations for control, pilot and data symbols, wherein pilot and control channel symbols that fall into the guard subcarrier are kept being transmitted.
Figure 14 shows a resource block with allocations for control, pilot, and data symbols, wherein pilot and control channel symbols are not allocated in subcarriers that are guard subcarriers.
Figure 15 shows a resource block with allocations for control, pilot and data symbols, wherein the grid of pilot and control channel symbols is shifted by the number of subcarriers used as guard subcarriers.
Figure 16 shows a schematic overview of the f-OFDM transmission scheme in a transmitter and a receiver scheme where additional transform precoding is applied.

### DETAILED DESCRIPTION

At first, some terms used in the description will be defined in the following list of abbreviations.
- CRS: cell-specific reference signal
- DL: downlink
- MCS: modulation and coding scheme
- MTC: machine-type communications
- OFDM: orthogonal frequency division multiplex
- OOB: out-of-band
- PAPR: peak-to-average power ratio
- PSD: power spectral density
- PRB: physical resource block
- SB: subband
- SC: subcarrier
- TBS: transport block size
- UL: uplink

The present technology is concerned with filtered OFDM, f-OFDM, SC-FDMA, where the filtering is done on a per subband basis.

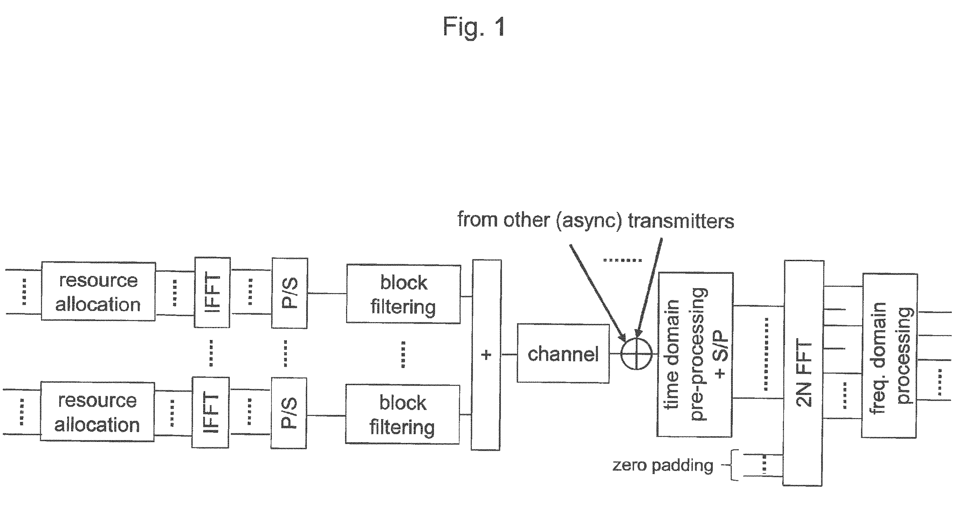

Figure 1 shows a schematic overview of an f-OFDM transmission scheme at a transmitter and at a receiver.

The present invention according to one embodiment provides a method for transmitting a multicarrier signal. The signal is generated by applying filtering on a per subband basis such that a resource space is divided into a plurality of subbands. Each of the subbands includes a plurality of subcarriers, and the subcarriers inside a subband include subcarriers carrying symbols, wherein each of said symbols is one of a data symbol, a pilot symbol, a control symbol, or other symbol. According to an embodiment of the invention there are one or more subcarriers inside the subband which are not used to transmit any symbol.

This has the effect that a regular structure, such as a grid structure of the resources, can be maintained while still mitigating out-of-band interference, because the guard subcarriers (the subcarriers not transmitting a symbol) are located inside the subband. In this manner the subband as e.g. defined by a filter passband bandwidth can be maintained with respect to its regular location at the frequency axis, even if the number of guard subcarriers used changes. By using subcarriers inside a subband as guard subcarriers the number of the guard subcarriers being used does not have any impact on the resource grid, which may thereby form a time-invariant resource grid which does not change irrespective of the number of guard subcarriers being used.

The present invention according to embodiments is concerned with the allocation of guard subcarriers with the goal of minimizing the interference between subbands while keeping a regular resource grid at the same time. The objective is to allocate a flexible number of guard subcarrier at the edges of each subband depending on the interference situation while keeping the regular resource grid similar to LTE PRB grid.

A regular structure, like the LTE PRB grid, enables simple signalling and reuse of well-established signalling procedures used in LTE. If this regular structure would be violated, several procedures would become much more complex, e.g. scheduling, control signalling etc. Furthermore, the users allocated on different subbands could not be treated independently.

In filtered OFDM however, depending on the filter characteristic of the subband filters and several other factors, e.g. MCS of a neighbouring user, power of other users, etc., a certain number of guard SCs should be allocated to keep the interference between users below a certain threshold. As the number of guard SCs changes depending on the criteria mentioned above, this number can be different for different subbands at the same time.

So far, research activities focussed on the optimization of the number of guard SCs considering different aspects. However, it seems that research did not yet consider the challenges to be addressed in order to keep the regular resource grid, which provides the benefit that the entire system and signalling may be kept as simple as in a regular resource grid structure, like for example in LTE. To this end, the allocation of data and the guard SCs has not been carefully considered.

The invention according to embodiments described here within achieves these requirements by allocating a certain amount of SCs inside the passband as guard SCs meaning that these SCs do not carry data. The passband bandwidth is always a multiple of a predefined number representing the smallest scheduling granularity in frequency domain, e.g. 12 SCs for one PRB in LTE. The bandwidth can be adapted to the allocated number of PRBs and any required guard SC will be placed inside this allocated number of PRBs. The legacy resource grid remains valid. The useful subcarriers within each subband are reduced to accommodate the guard bands at the edges. Only a few new f-OFDM relevant parameters (e.g. # of guard SCs) need to be introduced and possibly signaled to allow flexible guard band allocation. The spectral efficiency is similar to approaches described in the background section, as the amount of guard SCs stays the same, only the location of guards is different.

The lower part of Figure 4 contrasts the placement of guard subcarriers according to an embodiment of the present invention with the placement of guard subbands according to the state of the art of f-OFDM transmissions as shown in the upper half of the Figure 4 and described above. The signal obtained is illustrated and sketched as a dotted line, wherein the descending edge of a first signal overlaps with the ascending edge of a second signal so that the subbands determined by the filter passband bandwidths of the first and second signals are immediately adjacent. Guard SCs are included inside of each the subbands determined by the filter passband bandwidth.

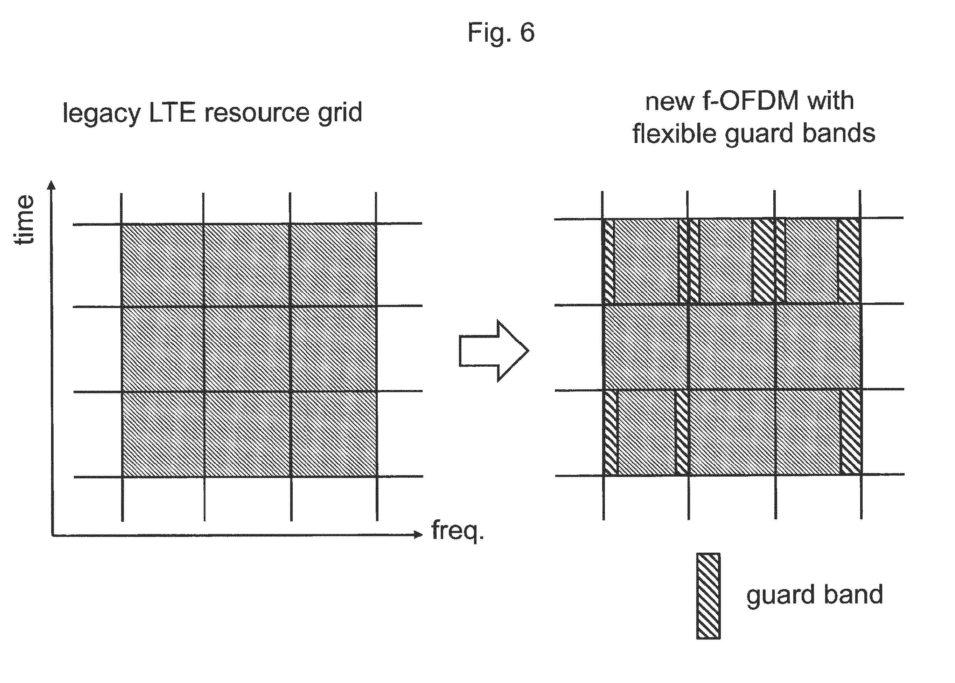

Figure 6 illustrates this principle when compared to the proposals in the state of the art illustrated in Figure 5 and discussed in the background section. Figure 6 shows a regular resource grid according to LTE on the left and the use of said resource grid for an f-OFDM transmission scheme including guard subcarriers according to an embodiment of the present invention.

A resource grid is typically dived into a plurality of subbands. Each subband shown in Figure 6 covers a contiguous frequency range. Neighbouring subbands may cover immediately adjacent frequency ranges.

Each subband includes a plurality of adjacent subcarriers. Thereby, the plurality of subcarriers which form a subband is typically an integer multiple of a predefined number of subcarriers. A subcarrier is typically used to carry symbols, wherein a symbol is one of a data symbol, pilot symbol, or control symbol. Some of the subcarriers are however not used to transmit any symbols. Subcarriers which are not used to transmit any symbol are also referred to as guard subcarriers since they can serve to address the problem of out-of-band radiation which may introduce interference with neighbouring subbands allocated to other users. The terminology "guard subcarrier" as used in the following should however not be understood in any limiting way and simply refers to subcarriers not used to transmit any symbol.

The guard subcarriers of a subband are typically located at one or at both edges of the subband. The guard subcarriers lie within a part of the subband wherein one of the boundaries of said part coincides with an edges of said subband and the other boundary of said part lies within the two edges of the subband. In Figure 6, subbands extend over one or more one more adjacent blocks of the resource grid. For example, the subband in the middle of the right side of Figure 6 is allocated to a single user and extends over at least three resource blocks. The subbands shown in the lower part of the resource grid extend over one and two subbands respectively.

The number of guard subcarriers and the part of the subband wherein those guard subcarriers are located may be chosen dynamically based on one or more parameters. Further aspects concerning the selection of the location and number of guard subcarriers are discussed in the following. In Figure 6, guard bands are shown with different widths, indicating different number of subcarriers for the respective guard band. For a specific subband, the guard bands allocated on the left and right end of the spectrum of that subband may have the same size, i.e. the same number of subcarriers. This is for example the case for the subbands shown in the upper left and lower left of the grid shown on the right side of Figure 6. In contrast, the subband on the upper middle of the grid includes two guard subbands of different width, i.e. each having a different number of guard subcarriers.

Concerning the location of the guard subcarriers within a subband, there are several alternatives: Guard subcarriers may be located only at the upper edge of a subband or inside a range having as a boundary the upper edge of the subband. Alternatively, guard subcarriers may be located only at the lower edge of the subband or inside a range having as boundary the lower edge of the subband. Alternatively, guard subcarriers may be located at the upper edge and at the lower edge of the subband or inside two ranges having as boundaries the upper edge and the lower edge of the subband respectively. In the right part of Figure 6, guard bands are allocated at the left and right boundaries of subbands, except for the transmission on the lower right in the grid where guard subcarriers are allocated only on the right end and edge of the spectrum of the subband.

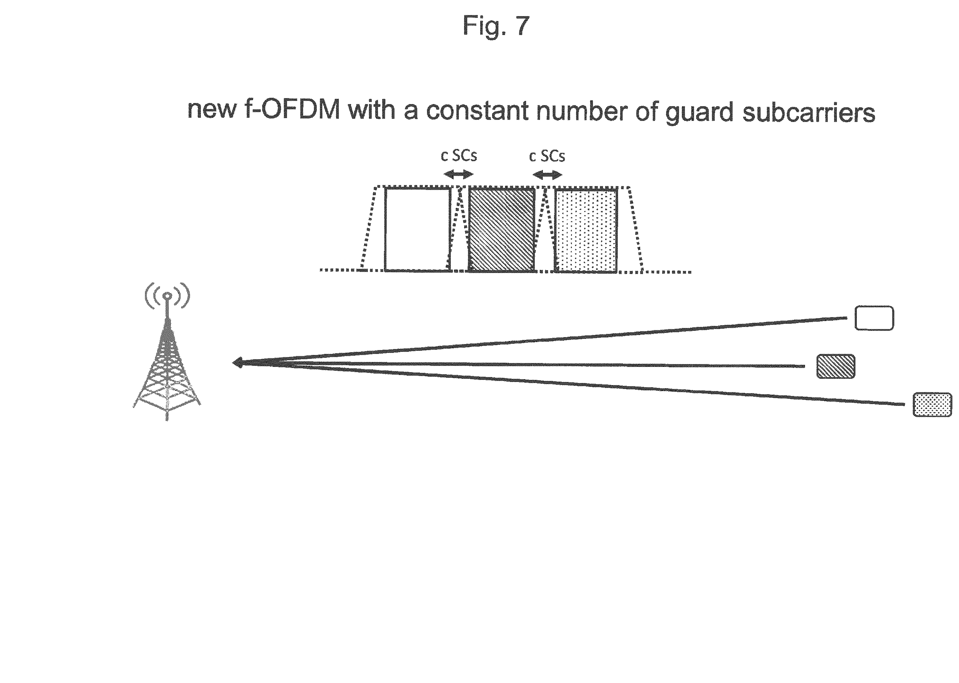

The number of guard subcarriers may be a constant number c, as illustrated in Figure 7.

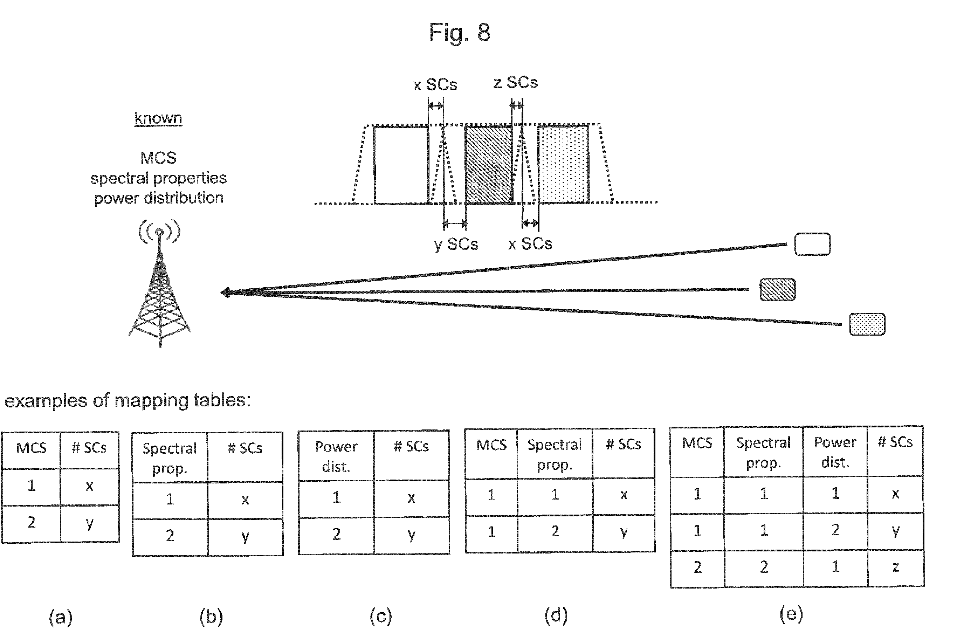

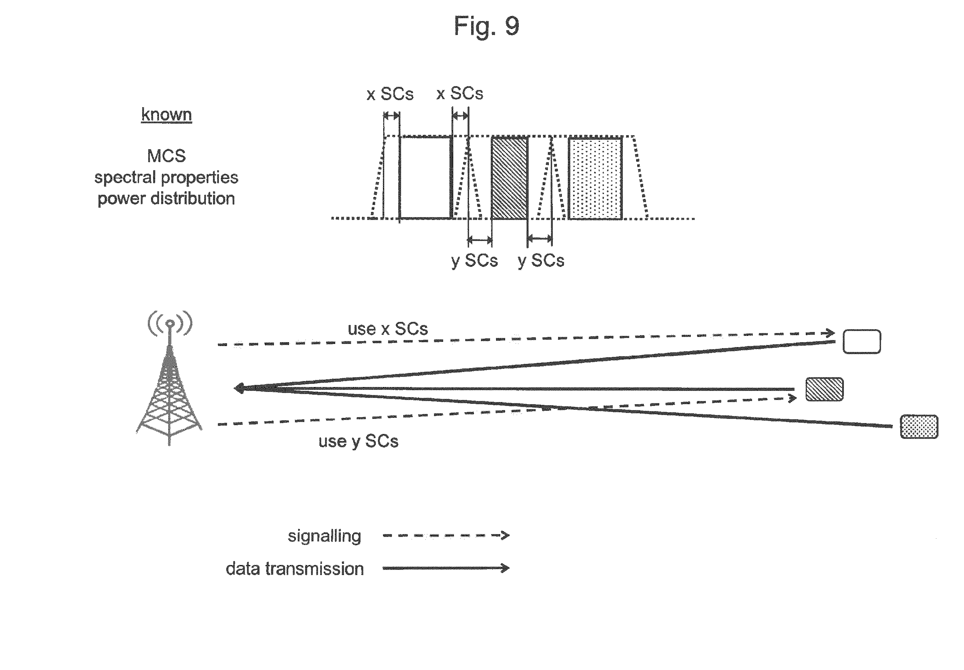

The number of guard subcarriers may be variable and different for different subbands as illustrated in Figures 8 and 9

The transmission method achieves that a transmission occurs between a transmitter and a receiver, wherein the transmission method is carried out at the transmitter side. The number and location of guard subcarriers is determined according to one or more parameters, said parameters including one or more of: a modulation and coding scheme, properties of applied filters, and a power relation between the transmission and other transmissions at the receiver. Figure 8 shows in the upper half three UEs that communicate in different subbands with a base station. The subbands determined by the filter passband bandwidths include guard subcarriers, for example a number of x guard subcarriers on the right edge of the user (white) transmitting on the leftmost subband, a number of y and z guard subcarriers on the left respectively the right edge of the user (shaded grey) transmitting on the middle subband, and a number of x subcarriers on the left edge of the user (dotted light grey) transmitting on the rightmost subband. Furthermore, in the lower part of the Figure 8 several mapping tables (a) to (e) are shown that allow to determine the number of guard subcarriers to be used in a subband according to different parameters. Table (a) determines the number of guard subcarriers according to the modulation and coding scheme MCS. Table (b) determines the number of guard subcarriers according to the spectral properties, i.e. properties of applied filters, Table (c) determines the number of guard subcarriers according to the power distribution, i.e. the power relation between the transmission and other transmissions, e.g. of neighbouring users, at the receiver, Table (d) determines the number of guard subcarriers according to a combination of the modulation and coding scheme and spectral properties, and Table (e) determines the number of guard subcarriers according to a combination of the modulation and coding scheme, spectral properties, and power distribution.

Figure 9 illustrates that said parameters or information from which said parameters may be derived at the transmitter side may be signalled between the transmitter and the receiver. In particular, the signalling may occur from a base station to a transmitting device. In one example, an eNodeB may decide on the number of guard subcarriers for different transmitting UEs based on criteria known at the eNodeB and signals the respective value to each transmitting UE. In Figure 9 the UE of the user (white) transmitting on the leftmost subband is signalled to use x guard subcarriers on the left and on the right edges inside its subband; moreover, the user (shaded grey) transmitting on the middle subband is signalled to use y guard subcarriers on the left and on the right edges inside its subband. The signalling of other guard subcarrier configurations is possible, such as guard bands on either one edge of the subband or different numbers of guard subcarriers on both edges. The criteria according to which the guard subcarrier configuration to be signalled is determined may be, as above, for example a modulation and coding scheme, properties of applied filters, and a power relation between the transmission and other transmissions at the receiver. The number of guard subcarriers could be determined at the eNodeB through quantization tables (a) to (e) as illustrated in Figure 8. Furthermore, the signalling may also occur in the direction from a UE to the base station.

Another aspect of the invention is concerned with adapting the transport block size, TBS, values when introducing the guard subcarriers. Since guard subcarriers are allocated inside a subband, the transport block size inside the subband is reduced over approaches from the state of the art that do not provide guard subcarriers inside the subband. For example, in current LTE specifications, the TBS values are carefully chosen in order to avoid zero padding and to achieve high transmission efficiency; TBS values are chose according to the TBS index, which is related to MCS, and the number of PRBs. TBS values are thus typically obtained from a table that maps a TBS Index (*I_{TBS}*) and the number of physical resource blocks (*N_{PRB}*), to a TBS value.

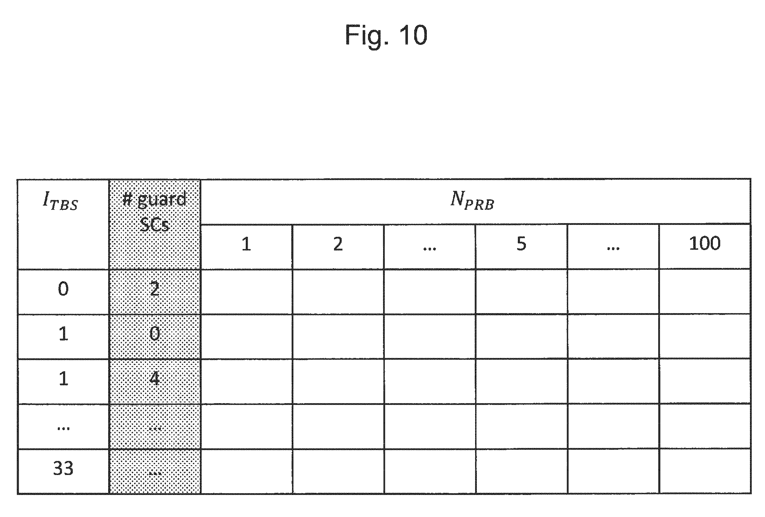

Figure 10 shows such a table, extended with an additional column which is shaded grey and which enables to consider also the number of guard SCs when determining the TBS value. It is to be noted that this extension may cause the size of the table to grow significantly, since possible combinations of *I_{TBS}* and number of guard SCs are to be mapped to TBS values. This growth in the size of the table may be reduced by defining a new table in terms of differences in TBS values with respect to the original table (without extension of the column specifying the number of number of guard SCs), so that the number of TBS is determined as the number of TBS read from the original table minus the difference obtained from the new table. Alternatively, the function *f for* determining the TBS index value *I_{TBS}=f(MCS)* could be adapted, so that lower index values are returned depending on the number of guard SCs, for example *I_{TBS}=f_{adapted}(MCS)* = *f(MCS) -* 1.

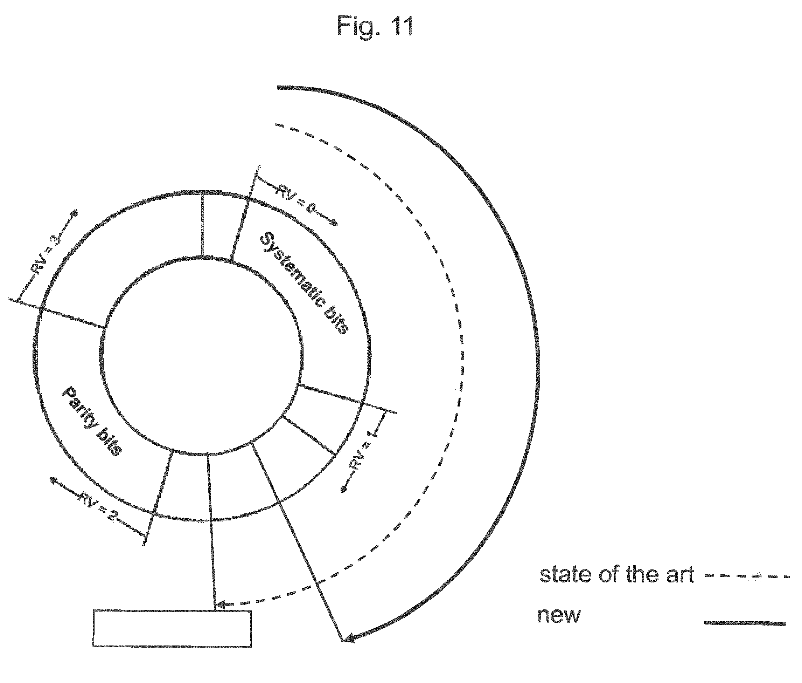

Another way to address the aspect of reduced transfer size is to adapt a rate matching algorithm as illustrated in Figure 11. Figure 11 shows only the principles how an algorithm should be changed to determine code bits that accommodate guard SCs according to the present invention. It is not intended to specify the details of adaptation for any specific rate matching algorithm here, In principle, a new step of puncturing and inserting guard SCs is introduced which considers the number of guard subcarriers: the number of code bits, which is the output of the rate matcher is to be adjusted to account for the guard SCs, i.e. it is to be reduced by the number of bits per symbol multiplied by the number of guard SCs.. In Figure 11, this reduction is shown in the length of the curved arrows relating to the "new" approach and the "state of the art". In summary, a rate matching algorithm is adjusted such that the number of code bits provided by a rate matcher are reduced by a number of code bits according to a number of guard subcarriers, which are not used to transmit any symbol.

Another aspect of the invention is concerned with different possibilities of configuring the location of guard subcarriers inside a subband. The different approaches discussed in the following consider different ways of handling conflicts between the allocation of control channel and pilot symbols and the allocation of the guard subcarriers.

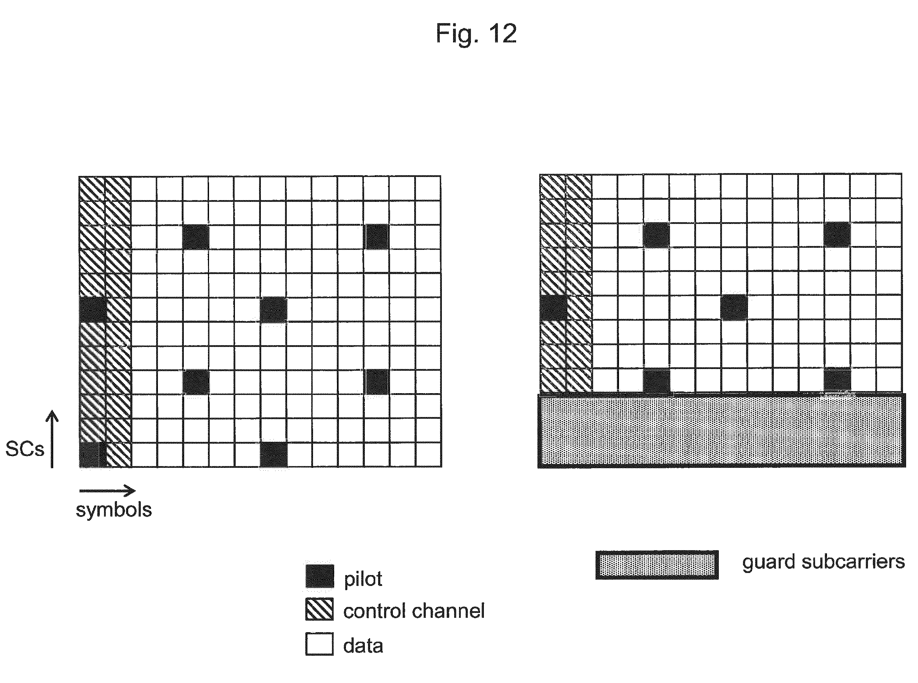

Figure 12 shows the situation, where the guard subcarriers are allocated in the lower three subcarriers of a subband, wherein the situation before the allocation is shown on the left and the situation after allocation is shown on the right of Figure 12. As can be obtained from Figure 12, there are collisions in the sense that some of the guard subcarriers cover control channel and pilot symbols. One possibility to handle this situation is simply not to transmit any control channel or pilot symbols that have collisions with guard subcarriers in the above sense. As a result, some information on the control channel and/or pilot symbols may be lost with the possible consequences of losing information transmitted on the control channel and/or a degradation of channel estimation which is based on pilot symbols. One possible way to avoid such loss of symbols is to shift the position of the guard SCs to avoid the location of pilots. In this case, control channel information may still be lost and depending on the number of desired guard SCs, also some pilots may be lost.

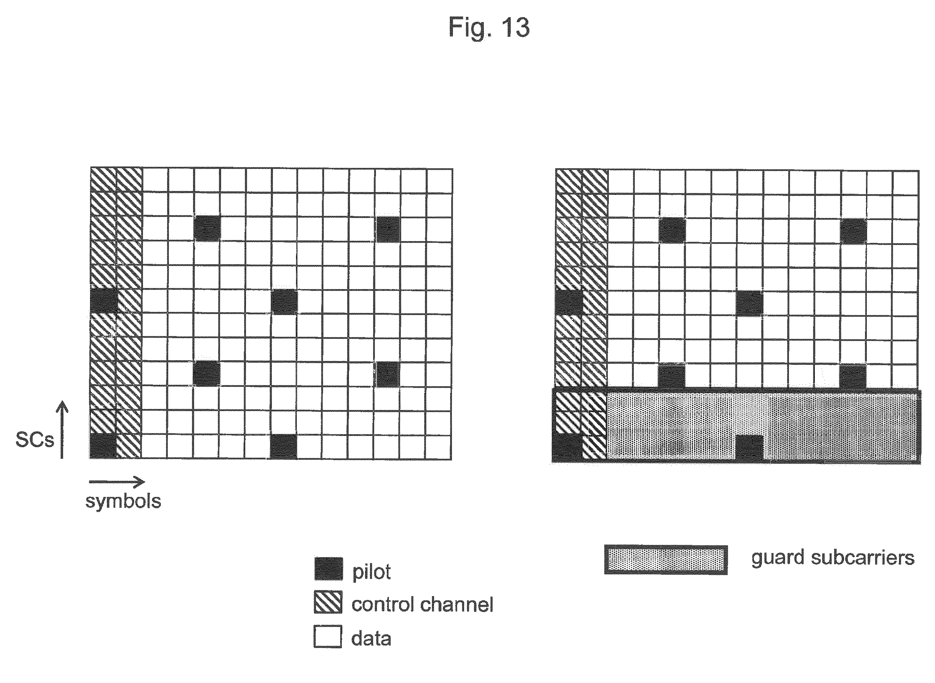

Figure 13 illustrates an alternative for handling collisions between the guard subcarrier and control channel or pilot symbols. As shown in Figure 13, the control channel and pilot symbols may be transmitted at the same resources despite the allocation of the guard subcarrier. In that sense, guard subcarriers are understood as subcarriers which are not used to transmit any symbol, except for control channel and pilot symbols. For this solution of handling collisions, it should however be considered that a transmission inside subcarriers allocated as guards may suffer from interference with neighboring subcarriers. In the case of asynchronous transmission, other users could produce high interference on these pilot and control channel symbols with the possible effect of channel estimation degradation. Furthermore, the pilot and control channel symbols transmitted in that manner could potentially produce high interference on subbands of other users.

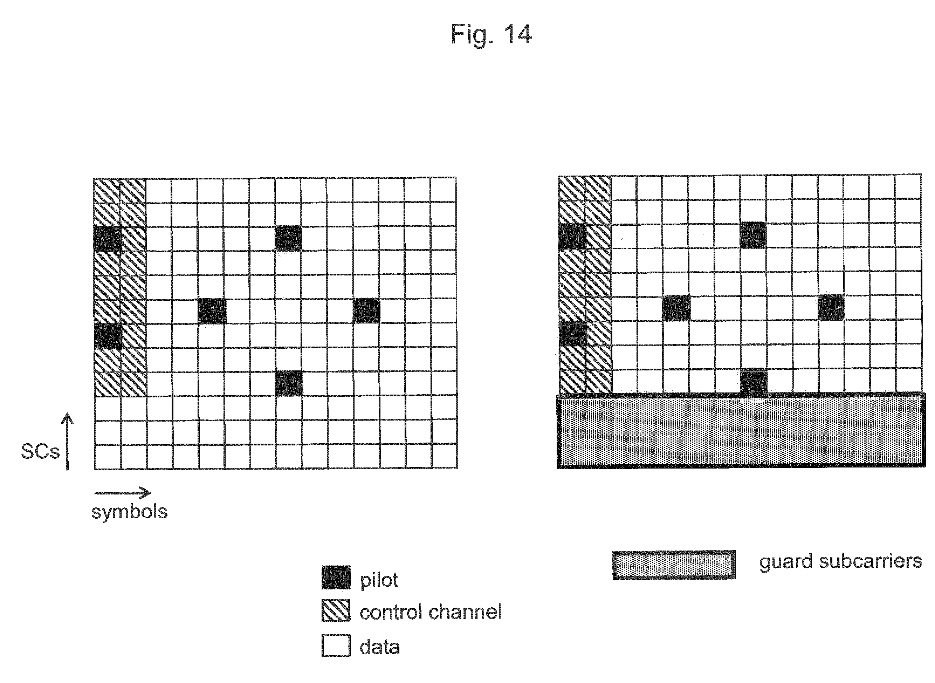

In another example, Figure 14 illustrates that the allocation of control channel and pilot symbol may occur only in areas of a subband, where a collision with the guard subcarriers is not possible. In Figure 14, the allocation of control channel and pilot symbols does not occur in the lower three subcarriers which are designated as guard subcarriers. This requires that the maximum possible value of the number of guard subcarriers is known and that a new pilot and control channel grid is designed accordingly.

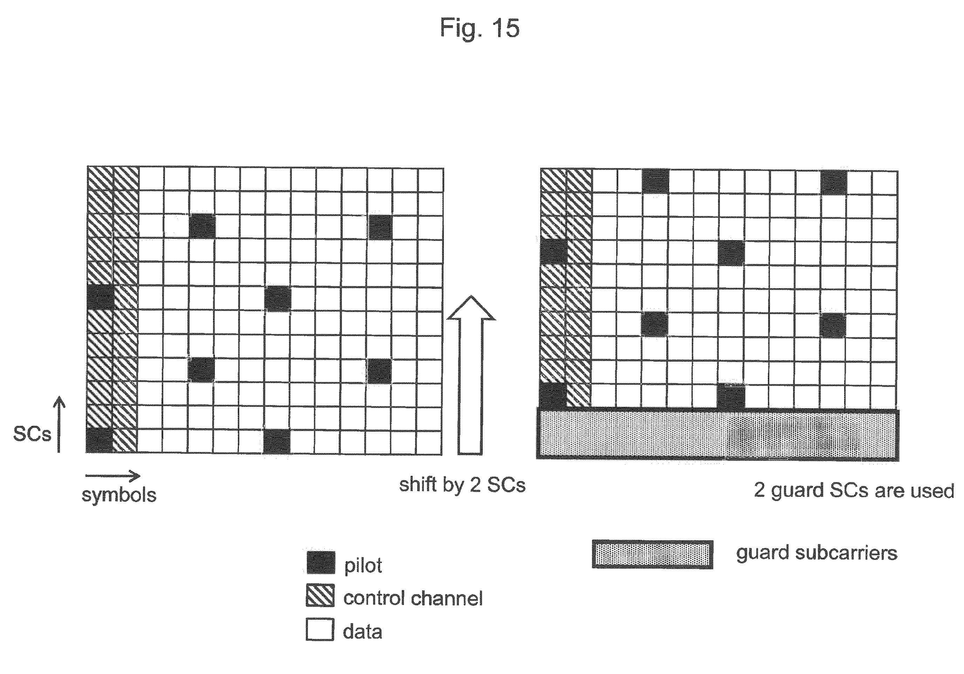

Figure 15 illustrates another alternative, where an allocation of control channel and pilot symbols may be shifted by a certain number of subcarriers which are to be used as guard subcarriers. The number of guard subcarriers may thereby be a constant number or be flexible and determined dynamically according to parameters as described above. A dynamic change of pilot locations for different subbands may cause an issue for CRS locations in downlink transmissions. For the uplink transmissions, the eNodeB is aware of all the positions.

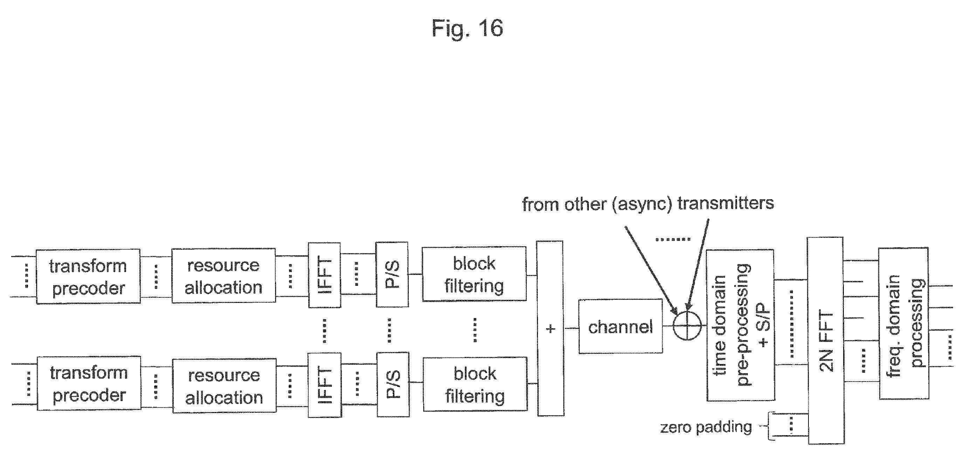

The proposed solution is also applicable to a transmission scheme known as single-carrier FDMA, SC-FDMA, which is used e.g. as an LTE uplink transmission scheme. SC-FDMA, which is also known as DFT spread OFDM, is similar to OFDM where an additional DFT spreading in a smaller dimension is applied before OFDM modulation at a transmitter and the respective IDFT after the OFDM demodulation at the receiver. The resource allocation for this transmission scheme is done in a very similar way as for OFDM, i.e. by scheduling resources to UEs according to a regular grid of physical resource blocks. Consequently, the principles of the present invention are also applicable to SC-FDMA. It is thereby considered that the mapping of users to subcarriers concerns subcarriers of a single-carrier transmit signal. Corresponding to the embodiments described above, one or more of said subcarriers of said single-carrier transmit signal are not used to transmit any symbol. Figure 16 illustrates that transform precoding is added to the f-OFDM transmission scheme of Figure 1. A transform precoder is applied before the resource allocation in the frequency domain, i.e. mapping on subcarriers, such that the PAPR property of the time domain transmission signals improves. One particular realization of the transform precoder is discrete Fourier transform that results in a good PAPR property and leads to a straightforward extension of the existing SC-FDMA modulation by additional filtering on a per subband basis.

The solution provided by the various embodiments described above has at least the following advantages and benefits when compared to the state of the art: In view of existing standards for regular resource grids, e.g. the LTE resource grid, the standardization effort needed to introduce f-OFDM by keeping the resource grid, e.g. PRB structure in LTE, would be minimal. The use of a predefined resource grid has also the advantage that existing transmission schemes could be used simultaneously with new f-OFDM based transmission schemes on the same resource grid. Furthermore, additional signalling, which would be required since state of the art approaches to f-OFDM would lead to a less structured resource grid (see Figure 5) would not be necessary. Instead, LTE-like signalling structures based on per PRB signalling could be used. At the same time the use of f-OFDM with guard subcarriers according to the present invention achieves high flexibility meaning it is as flexible as proposals in the state of the art providing flexibility in assigning a different number of guard SCs between users or subbands.

It will be readily apparent to the skilled person that the method, steps and their variants described in connection with embodiments of the present invention may be implemented in hardware, in software, or as a combination of both. In particular it will be appreciated that the embodiments of the invention may be implemented by a computer program or computer programs running on a computer or being executed by a microprocessor. Any apparatus implementing the invention may in particular take the form of a computing device acting as a communicating network entity.

## Claims

1. A method for transmitting a multicarrier signal,
wherein said signal is generated by applying filtering on a per subband basis such that a resource space is divided into a plurality of subbands wherein each of said subbands includes a plurality of subcarriers,
wherein said subcarriers inside a subband include
subcarriers carrying symbols, wherein each of said symbols is one of a data symbol, a pilot symbol, a control symbol, or other symbol, and
one or more subcarriers which are not used to transmit any symbol.

2. The method of claim 1,
wherein transform precoding is applied to symbols before they are mapped onto subcarriers.

3. The method of claim 2,
wherein said transform precoding is a discrete Fourier transform.

4. The method of one of the previous claims,
wherein a start and end of each subband of the plurality of subbands are aligned on a resources grid,
the resource grid being formed by a plurality of consecutive resource blocks of the resource space and being time-invariant, and
each resource block being formed by a predefined number of at least two subcarriers.

5. The method of one of the previous claims,
wherein a width of a subband of the plurality of subbands is determined by a filter passband bandwidth of a filter applied when generating the multicarrier signal.

6. The method of one of the previous claims,
wherein said one or more subcarriers not used to transmit any symbol are located at an edge of said subband.

7. The method of one of the previous claims,
wherein said subcarriers not used to transmit any symbol are located such that they lie within a part of said subband,
wherein one of the boundaries of said part of said subband coincides with an edge of said subband and another boundary of said part of said subband lies within two edges of said subband.

8. The method of one of the preceding claims, wherein a number of subcarriers not used to transmit any symbol or the part of said subband within which said subcarriers not used to transmit any symbol are located is chosen dynamically based on one or more parameters indicating the extent to which suppression of out of band interference is necessary.

9. The method of one of the preceding claims, wherein said subcarriers not used to transmit any symbol are located such that
they are located only at the upper edge of a subband or inside a range having as boundary the upper edge of the subband, or
they are located only at the lower edge of said subband or inside a range having as boundary the lower edge of the subband, or
they are located at the upper edge and at the lower edge of said subband or inside two ranges having as boundaries the upper edge and the lower edge of the subband, respectively.

10. The method according to any of the previous claims,
wherein the transmission occurs between a transmitter and a receiver, and
wherein a number and/or the location of subcarriers not used to transmit any symbol is determined according to one or more parameters, said parameters including one or more of: a modulation and coding scheme, properties of applied filters, and a power relation between the transmission and other transmissions at the receiver,
wherein said parameters are known by the transmitter and the receiver, or some or all of said parameters are signalled between the transmitter and the receiver.

11. The method according to claims 1 to 10,
wherein the transmission occurs from a first device to a second device, and
wherein the number of subcarriers not used to transmit any symbol is signalled from the second device to the first device, and
wherein the signalling preferably uses physical layer signalling or MAC layer signalling.

12. The transmission method according to any of the previous claims, wherein a transport block size, TBS, indicating a number of information bits within one codeword is determined according to a TBS index, a number of physical resources or physical resource blocks, and a number of subcarriers not used to transmit any symbol.

13. The transmission method according to any of the previous claims wherein a rate matching algorithm
adjusts a number of code bits provided by a rate matcher by reducing a number of code bits according to a number of subcarriers not used to transmit any symbol.

14. The transmission method according to any of the previous claims, wherein subcarriers carrying symbols include subcarriers for pilot symbols and/or control information, and wherein a frame structure is adapted to schedule pilot symbols and/or control information by
mapping pilot symbols and/or control information or shifting a grid of pilot symbols and/or control information such as to avoid that pilot symbols and/or control information are transmitted on subcarriers not used to transmit any symbol, or
cancelling pilot and/or control information symbols that would be transmitted on subcarriers not used to transmit any symbol.

15. A transmission apparatus for transmitting a multicarrier signal, comprising:
A module for generating said signal by applying filtering on a per subband basis such that a resource space is divided into a plurality of subbands wherein each of said subbands includes a plurality of subcarriers,
wherein said subcarriers inside a subband include
subcarriers carrying symbols, wherein each of said symbols is one of a data symbol, a pilot symbol, a control symbol, or other symbol, and
one or more subcarriers which are not used to transmit any symbol.
